# EUROPÄISCHE PATENTSCHRIFT

(11) **EP 1 917 086 B1**
(45) Veröffentlichungstag und Bekanntmachung des Hinweises auf die Patenterteilung: **29.12.2010**
(21) Anmeldenummer: 06776931.5
(22) Anmeldetag: 18.08.2006
(51) Int. Cl.: B01D 35/147

(54) **ÖLFILTERANORDNUNG**
OIL FILTER ASSEMBLY
ENSEMBLE FILTRE A HUILE

(30) Priorität: 25.08.2005 DE 102005041037
(43) Veröffentlichungstag der Anmeldung: 07.05.2008
(73) Patentinhaber: Joma-Polytec GmbH, 72411 Bodelshausen (DE)
(72) Erfinder: PFITZER, Friedhelm, 72414 Rangendingen (DE); JUNGMANN, Peter, 72406 Bisingen (DE); MAUTE, Alexander, 72379 Hechingen-Stetten (DE)
(74) Vertreter: Dreiss
(86) Internationale Anmeldenummer: PCT/EP2006/008135
(87) Internationale Veröffentlichungsnummer: WO 2007/022914

(56) Entgegenhaltungen:
- EP-A1- 0 580 491
- EP-A1- 0 839 563
- EP-A1- 1 431 636
- DE-U1- 20 006 972
- DE-U1- 20 213 512
- DE-U1- 29 917 562
- GB-A- 2 375 973

## Beschreibung

Die Erfindung betrifft eine Ölfilteranordnung mit einem Gehäuse, das einen Aufnahmeraum für ein in das Gehäuse einsetzbares, radial mit Öl durchströmbares Filterelement aufweist, mit einem. Öleinlass und einem Ölauslass, mit einem im Aufnahmeraum vorhandenen, das Filterelement tragenden Stützrohr, wobei im Stützrohr ein Umgehungsventil vorgesehen ist, welches bei Überschreiten eines Grenzdrucks öffnet und durch welches Öl vom Öleinlass unter Umgehung des Filterelements zum Ölauslass strömen kann, wobei das Umgehungsventil einen Ventilsitz, einen mit dem Ventilsitz zusammenwirkenden Ventilkörper und ein käfigartig ausgebildetes Haubenteil umfasst.

Aus der DE 102 59 884 A1 ist eine derartige Ölfilteranordnung bekannt geworden. Das Umgehungsventil sitzt dabei am freien Ende des Stützrohrs.

Aus der DE 195 02 020 C2 ist eine ähnliche Ölfilteranordnung bekannt geworden. Auch bei dieser Ölfilteranordnung sitzt das Umgehungsventil am freien Ende des Stützrohrs. Das Umgehungsventil besteht hierbei aus einem Ventilkörper, einer Ventilfeder sowie einem zweiteiligen Ventilgehäuse, das einen Ventilsitz und ein Haubenteil umfasst.

Die Anordnung des Umgehungsventils am Stützrohr ist bei den vorbekannten Ölfilteranordnungen vergleichsweise aufwändig. Das Umgehungsventil besteht dabei aus mehreren Teilen, die zum einen miteinander zu fügen sind und zum anderen am Stützrohr zu befestigen sind.

Der vorliegenden Erfindung liegt die Aufgabe zugrunde, eine Ölfilteranordnung bereitzustellen, die einen vereinfachten, und dennoch funktionssicheren Aufbau aufweist.

Diese Aufgabe wird durch eine Ölfilteranordnung der eingangs genannten Art dadurch gelöst, dass das Stützrohr und das Haubenteil einstückig aus Kunststoff hergestellt sind. Hierdurch reduzieren sich die miteinander zu fügenden Bauteile wesentlich. Eine Fixierung des Haubenteils am Ventilsitz und/oder am Stützrohr entfällt damit gänzlich. Das Umgehungsventil nimmt damit zwangsweise eine vordefinierte Lage im Stützrohr ein. Zudem ist lediglich ein Bauteil am Stützrohr zu befestigen, nämlich der Ventilsitz. Die aus dem vorbekannten Stand der Technik aufwändige Anbindung des Haubenteils am Ventilsitz entfällt gemäß der Erfindung. Das Stützrohr samt Haubenteil kann dabei als Spritzgussteil hergestellt sein, wobei beispielsweise zunächst das Stützrohr und in einem weiteren Spritzvorgang das Haubenteil an das Stützrohr angespritzt werden kann. Das Stützrohr samt Haubenteil bildet dann eine einstückige, voneinander untrennbare Einheit. Das Haubenteil ist folglich in das Stützrohr integriert.

Dabei ist das Haubenteil im Bereich des freien Endes des Stützrohrs angeordnet. Dies hat den Vorteil, dass der Ventilsitz samt Ventilkörper auf vergleichsweise einfache Art und Weise in das Stützrohr eingefügt werden kann. Vorteilhafterweise ist das Haubenteil an der einem den Aufnahmeraum verschließenden Deckel zugewandten Seite des Stützrohrs angeordnet.

Eine vorteilhafte Ausführungsform der Erfindung ergibt sich dann, wenn im Bereich des freien Endes des Stützrohrs eine nach radial innen gerichtete Verengung vorhanden ist, an der das Haubenteil angeordnet ist. Durch die radial nach innen gerichtete Verengung kann gewährleistet werden, dass zwischen dem käfigartigen Haubenteil und dem Stützrohr genügend Raum vorhanden ist, durch welchen Öl, insbesondere bei geöffnetem Überstromventil, fließen kann. Von der Verengung ausgehend, kann sich das Haubenteil beispielsweise in axialer und/oder in radialer Richtung hin erstrecken.

Ferner ist vorgesehen, dass der Innendurchmesser der Verengung gleich oder geringfügig größer als der Außendurchmesser eines Mittelabschnitts des Ventilsitzes ist. Hierdurch wird der Ventilsitz in der Verengung zentriert und kann seine Lage in radialer Richtung vorteilhafterweise nicht wesentlich verändern.

Zur positionsgenauen vordefinierten Führung des Ventilkörpers kann das Haubenteil einen Führungsabschnitt aufweisen. Der Führungsabschnitt kann dabei beispielsweise als kreiszylindrischer Führungszapfen ausgebildet sein.

Zum Halten des Umgehungsventils in Schließstellung ist denkbar, dass ein sich am Haubenteil abstützendes, den Ventilkörper gegen den Ventilsitz beaufschlagendes Federelement vorgesehen ist. Das Federelement kann dabei beispielsweise eine Schraubenfeder sein.

Ferner ist vorteilhaft, wenn bei der erfindungsgemäßen Ölfilteranordnung der Ventilsitz mit dem Stützrohr unlösbar verbunden ist. Hierdurch kann ein Lösen des Ventilsitzes vom Stützrohr wirksam unterbunden werden.

Zur positionsgenauen Anordnung des Ventilsitzes am Stützrohr ist ferner erfindungsgemäß denkbar, dass der Ventilsitz ringartig ausgebildet ist und eine nach radial außen ragenden Kragen zur Verbindung mit einem Anlageabschnitt des Stützrohrs aufweist. Der nach außen radial liegende Kragen hat zudem den Vorteil, dass genügen Material bereitgestellt wird, um eine geeignete Verbindung zu realisieren.

Zur unlösbaren Verbindung ist denkbar, dass der Kragen mit dem Anlageabschnitt verschweißt, insbesondere ultraschallverschweißt ist.

Vorteilhaft ist, wenn der Kragen des Ventilsitzes das freie Ende des Stützrohrs bildet, da dann eine Befestigung des Ventilsitzes auf günstige Art und Weise möglich ist.

Es ist vorteilhaft, wenn die Verengung auf der dem freien Ende des Stützrohrs zugewandten Seite wenigstens abschnittsweise eine ringartige Stirnfläche aufweist, die den Anlageabschnitt für den Kragen des Ventilsitzes bildet. Durch das Vorsehen einer derartigen Stirnfläche.wird genügend Material zur sicheren Anbindung des Ventilsitzes am Stützrohr zur Verfügung gestellt.

Dabei ist denkbar, dass die Stirnfläche von einem in axialer Richtung ragenden Rand eingefasst wird. Hierdurch kann eine zusätzliche Zentrierung des Ventilsitzes am Stützrohr erreicht werden.

Erfindungsgemäß ist ferner vorteilhaft, wenn der Außendurchmesser des Randes gleich oder kleiner als der Außendurchmesser des Stützrohrs ist. Dies hat den Vorteil, dass der Rand beim Aufstecken des Filterelements auf das Stützrohr nicht im Wege ist und das Aufstecken des Filterelements auf das Stützrohr behindert.

Dabei ist denkbar, dass der Ventilsitz im Bereich des an der Verengung anliegenden Mittelabschnitts mit dem Stützrohr unlösbar, beispielsweise durch Verschweißen, verbunden ist. Gemäß einer weiteren Ausführungsform der Erfindung ist vorteilhaft, wenn das Stützrohr samt dem Umgehungsventil in den Aufnahmeraum eingesetzt und dort unlösbar festgesetzt ist. Dies führt zu einer erheblichen Vereinfachung bei der Fertigung der Ölfilteranordnung. Die separat handzuhabende Baugruppe, Stützrohr samt Umgehungsventil, kann vormontiert werden und kann dann im Aufnahmeraum, insbesondere am Gehäuse, unlösbar festgesetzt werden.

Weitere Einzelheiten und vorteilhafte Ausgestaltungen der Erfindung sind der nachfolgenden Beschreibung zu entnehmen, in der die Erfindung anhand des in der Zeichnung dargestellten Ausführungsbeispiels näher beschrieben und erläutert ist.

Es zeigen:
- Figur 1: einen Längsschnitt durch eine erfindungsgemäße Ölfilteranordnung; und
- Figur 2: eine Vergrößerung des in der Figur 1 mit II dargestellten Bereichs.

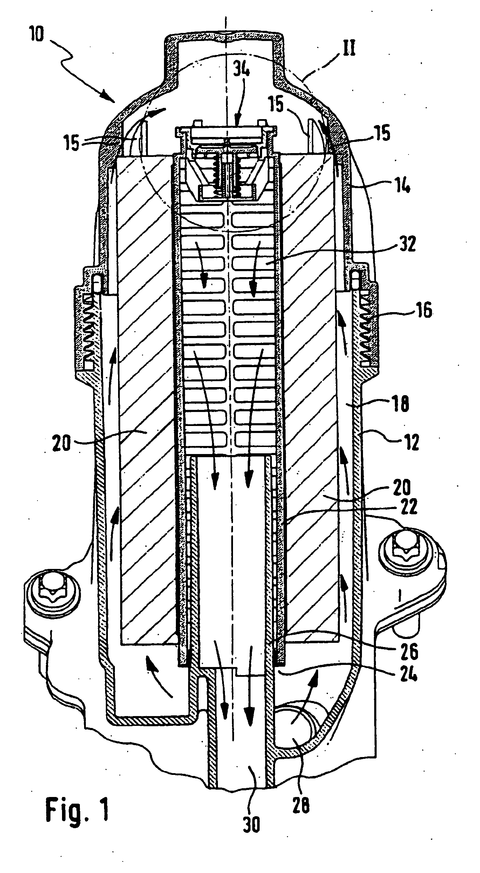

In der Figur 1 ist eine erfindungsgemäße Ölfilteranordnung 10 dargestellt. Die Ölfilteranordnung 10 umfasst ein Gehäuse 12, das mit einem Deckel 14 verschließbar ist. Der Deckel 14 ist dabei über ein Gewinde 16 auf das Gehäuse 12 aufschraubbar. Das Gehäuse 12 bildet einen Aufnahmeraum 18 für ein Filterelement 20. Das Filterelement 20 ist dabei auf ein Stützrohr 22 aufgesteckt. Das Stützrohr 22 selbst ist im Fußbereich 24 eines gehäuseseitigen Staurohrs 26 unlösbar am Gehäuse befestigt.

Die Ölfilteranordnung 10 sieht ferner einen Öleinlass 28 für zu filterndes Rohöl und einen Ölauslass 30 für gefiltertes Reinöl vor.

Im normalen Betriebszustand der Ölfilteranordnung strömt verschmutztes Rohöl durch den Öleinlass 28 in den Aufnahmeraum 18. Aufgrund einer Druckdifferenz zwischen der Öleinlassseite und der Ölauslassseite strömt das Öl in radialer Richtung durch das Filterelement 20. Das gefilterte Reinöl fließt dann in radialer Richtung durch das Stützrohr 22, welches zum Durchlass des Reinöls eine große Anzahl von Durchbrüchen 32 aufweist. Das derart gefilterte Reinöl verlässt dann über den Ölsauslass 30 die Ölfilteranordnung 10. Für den Fall, dass der Druckunterschied zwischen der Öleinlassseite und der Ölauslassseite, beispielsweise aufgrund des sich mit Verschmutzungen zusetzenden Filterelements, einen gewissen Grenzdruck überschreitet, öffnet ein an dem freien Ende des Stützrohrs 22 vorhandenes Umgehungsventil 34. Bei geöffnetem Umgehungsventil 34 strömt folglich ungefiltertes Öl, kommend vom Öleinlass 28, durch das Umgehungsventil 34 zum Ölauslass 30.

An der Innenseite des Deckels 14 sind Stützrippen 15 vorgesehen, mit denen das Filterelement in axialer Richtung hin zum Boden des Aufnahmeraums 18 beaufschlagt werden kann. Das Öl kann zwischen den Rippen 15 in den oberen Bereich des Deckels 14 einströmen.

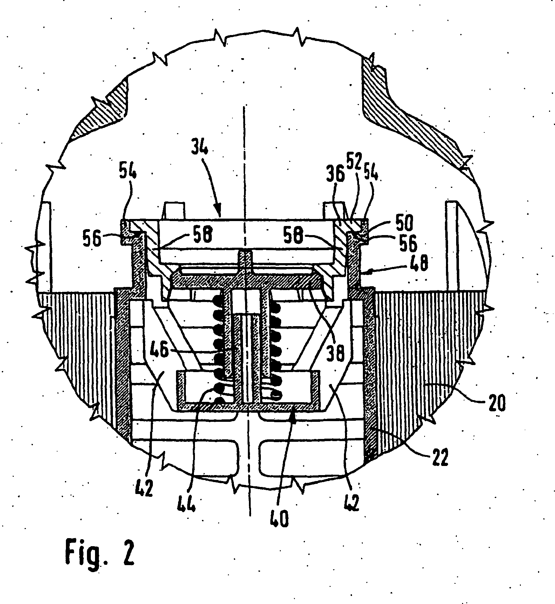

Wie aus der vergrößerten Darstellung gemäß Figur 2 deutlich wird, umfasst das Umgehungsventil 34 dabei einen Ventilsitz 36, ein mit dem Ventilsitz zusammenwirkenden Ventilkörper 38 sowie ein einstückig mit dem Stützrohr 22 ausgebildetes käfigartiges Haubenteil 40. Das Haubenteil ist dabei über insgesamt vier Stege 42, von denen im Schnitt gemäß Figur 2 zwei dargestellt sind, an das Stützrohr 22 angeformt. Das Stützrohr 22 samt Haubenteil 40 ist dabei aus Kunststoff hergestellt. Am Haubenteil 40 stützt sich ein Federelement 44 ab, das den Ventilkörper 38 gegen den Ventilsitz 36 dichtend beaufschlagt. Bei Erreichen des Grenzdrucks bewegt sich der Ventilkörper 38 entgegen der Federkraft des Federelements 44 in axialer Richtung.

Wie aus der Figur 2 deutlich wird, weist das Haubenteil 40 in seinem axial zentralen Bereich einen Führungszapfen 46 auf, der den Ventilkörper in axialer Richtung führt.

Die Verengung 48 weist auf der dem freien Ende des Stützrohrs zugewandten Seite eine ringartige Stirnfläche 50 auf, die als Anlageabschnitt für einen nach radial außen gerichteten Kragen 52 des Ventilsitzes 36 dient. Die Stirnfläche 50 wird in axialer und radialer Richtung von einem stützrohrseitigen Rand 54 eingefasst. Im Bereich der Stirnfläche 50 ist der Kragen 52 mit dem Stützrohr 22 durch eine Schweißverbindung 56, insbesondere durch eine Ultraschallschweißverbindung, unlösbar verbunden.

Wie aus der Figur 2 ferner deutlich wird, ist der Innendurchmesser der Verengung 48 gleich, beziehungsweise geringfügig größer als der Außendurchmesser eines an der Verengung 48 anliegenden Mittelabschnitts 58 des Ventilsitzes 36, wodurch eine positionsgenaue Anordnung des Ventilsitzes im Stützrohr 22 gewährleistet wird. Erfindungsgemäß kann vorgesehen sein, dass zusätzlich oder anstelle der Schweißverbindung 56 eine Schweißverbindung zwischen dem Stützrohr 22 und dem Ventilsitz 36 im Bereich des Mittelabschnitts 58 vorgesehen ist. Anstelle einer Schweißverbindung ist erfindungsgemäß jede andere Art der unslösbaren Verbindung denkbar, beispielsweise eine stoffschlüssige Klebeverbindung.

Um ein günstiges Aufschieben des Filterelements 20 auf das Stützrohr 22 zu ermöglichen, ist der Außendurchmesser des Randes 54 kleiner als der Außendurchmesser des restlichen Stützrohrs 22, abgesehen von der Verengung 48.

## Patentansprüche

1. Ölfilteranordnung (10) mit einem Gehäuse (12), das einen Aufnahmeraum (18) für ein in das Gehäuse einsetzbares, radial mit Öl durchströmbares Filterelement (20) aufweist, mit einem Öleinlass (28) und einem Ölauslass (30), mit einem im Aufnahmeraum (18) vorhandenen, das Filterelement tragenden Stützrohr (22), wobei im Stützrohr (22) ein Umgehungsventil (34) vorgesehen ist, welches bei Überschreiten eines Grenzdruckes öffnet und durch welches dann Öl vom Öleinlass (28) unter Umgehung des Filterelements (20) zum Ölauslass (30) strömen kann, wobei das Umgehungsventil (34) einen Ventilsitz (36), einen mit dem Ventilsitz (36) zusammenwirkenden Ventilkörper (38) und ein käfigartig ausgebildetes Haubenteil (40) umfasst, **dadurch gekennzeichnet, dass** das Stützrohr(22) und das Haubenteil (40) einstückig derart aus Kunststoff ausgebildet sind, dass das Haubenteil (40) an das Stützrohr (22) angeformt ist, wobei im Bereich des freien Endes des Stützrohrs (22) eine nach radial innen gerichtete Verengung (48), an der das Haubenteil (40) angeordnet ist, vorhanden ist, und wobei der Innendurchmesser der Verengung (48) gleich oder geringfügig größer als der Außendurchmesser eines Mittelabschnitts des Ventilsitzes ist, so dass beim Einfügen des Ventilsitzes (36) samt Ventilkörper (38) in das Stützrohr (22) der Ventilsitz (36) in der Verengung (48) zentriert wird.

2. Ölfilteranordnung (10) nach Anspruch 1, **dadurch gekennzeichnet, dass** das Haubenteil (40) einen Führungsabschnitt (46) zur Führung des Ventilkörpers (38) aufweist.

3. Ölfilteranordnung (10) nach Anspruch 1 oder 2, **dadurch gekennzeichnet, dass** ein sich am Haubenteil (40) abstützendes, den Ventilkörper (38) gegen den Ventilsitz (36) beaufschlagendes Federelement (44) vorgesehen ist.

4. Ölfilteranordnung (10) nach einem der vorhergehenden Ansprüche, **dadurch gekennzeichnet, dass** der Ventilsitz (36) mit dem Stützrohr (22) unlösbar verbunden ist.

5. Ölfilteranordnung (10) nach einem der vorhergehenden Ansprüche, **dadurch gekennzeichnet, dass** der Ventilsitz (36) ringartig ausgebildet ist und einen nach radial außen ragenden Kragen (52) zur Verbindung mit einem Anlageabschnitt (50) des Stützrohrs (22) aufweist.

6. Ölfilteranordnung (10) nach Anspruch 5, **dadurch gekennzeichnet, dass** der Kragen (52) mit dem Anlageabschnitt (50) verschweißt, insbesondere ultraschallverschweißt, ist.

7. Ölfilteranordnung nach Anspruch 5 oder 6, **dadurch gekennzeichnet, dass** der Kragen (52) das freie Ende des Mittelrohrs (22) bildet.

8. Ölfilteranordnung (10) nach wenigstens einem der vorhergehenden Ansprüche, **dadurch gekennzeichnet, dass** die Verengung (48) auf der dem freien Ende des Stützrohres (22) zugewandten Seite wenigstens abschnittsweise eine ringartige Stirnfläche aufweist, die den Anlageabschnitt (50) für den Kragen des Ventilsitzes bildet.

9. Ölfilteranordnung (10) nach Anspruch 8, **dadurch gekennzeichnet, dass** die Stirnfläche (50) von einem in axialer Richtung ragenden Rand (54) eingefasst wird.

10. Ölfilteranordnung (10) nach Anspruch 9, **dadurch gekennzeichnet, dass** der Rand (54) zusammen mit dem Kragen (52) das freie Ende des Stützrohrs (22) bildet.

11. Ölfilteranordnung (10) nach Anspruch 9 oder 10, **dadurch gekennzeichnet, dass** der Außendurchmesser des Randes (54) gleich oder kleiner als der Außendurchmesser des Stützrohrs (22) ist.

12. Ölfilteranordnung (10) nach einem der vorhergehenden Ansprüche, **dadurch gekennzeichnet, dass** das Stützrohr (22) samt dem Umgehungsventil (34) in den Aufnahmeraum (18) eingesetzt und dort unlösbar festgesetzt ist.

## Claims

1. Oil filter arrangement (10) comprising a housing (12) with a receiving space (18) for a filter element (20) that can be inserted into the housing and through which oil can flow in a radial direction, an oil inlet (28), an oil outlet (30), and a support tube (22) provided in the receiving space (18) and bearing the filter element, wherein a bypass valve (34) is provided in the support tube (22), which opens when a limit pressure is exceeded and through which oil can flow from the oil inlet (28) to the oil outlet (30), thereby bypassing the filter element (20), wherein the bypass valve (34) comprises a valve seat (36), a valve body (38) that cooperates with the valve seat (36) and a cage-like lid part (40), **characterized in that** the support tube (22) and the lid part (40) are formed in one piece in such a way from plastic material, that the lid part (40) is moulded to the support tube (22), wherein a radially inwardly directed narrowing (48) is provided in the area of the free end of the support tube (22) on which the lid part (40) is disposed, and wherein the inner diameter of the narrowing (48) is equal to or slightly larger than the outer diameter of a center section (56) of the valve seat (36), so that when introducing the valve seat (36) with valve body (38) into the support tube (22) the valve seat (36) is centered in the narrowing (48).

2. Oil filter arrangement (10) according to claim 1, **characterized in that** the lid part (40) comprises a guiding section (46) for guiding the valve body (38).

3. Oil filter arrangement (10) according to claim 1 or 2, **characterized in that** a spring element (44) is provided, which is supported on the lid part (40) and loads the valve body (38) against the valve seat (36).

4. Oil filter arrangement (10) according to any one of the preceding claims, **characterized in that** the valve seat (36) is undetachably connected to the support tube (22).

5. Oil filter arrangement (10) according to any one of the preceding claims, **characterized in that** the valve seat (36) has an annular design and a radially outwardly projecting collar (52) for connection to an abutment section (50) of the support tube (22).

6. Oil filter arrangement (10) according to claim 5, **characterized in that** the collar (52) is welded to the abutment section (50), in particular through ultrasound welding.

7. Oil filter arrangement according to claim 5 or 6, **characterized in that** the collar (52) forms the free end of the center tube (22).

8. Oil filter arrangement (10) according to any one of the preceding claims, **characterized in that** at least sections of the narrowing (48) on the side facing the free end of the support tube (22) have an annular front face that forms the abutment section (50) for the collar of the valve seat.

9. Oil filter arrangement (10) according to claim 8, **characterized in that** the front face (50) is bordered by an edge (54) that projects in an axial direction.

10. Oil filter arrangement (10) according to claim 9, **characterized in that** the edge (54) and the collar (52) form together the free end of the support tube (22).

11. Oil filter arrangement (10) according to claim 9 or 10, **characterized in that** the outer diameter of the edge (54) is equal to or smaller than the outer diameter of the support tube (22).

12. Oil filter arrangement (10) according to any one of the preceding claims, **characterized in that** the support tube (22) and bypass valve (34) are inserted and undetachably fixed in the receiving space (18).

## Revendications

1. Agencement de filtre à huile (10) comprenant un boîtier (12), qui présente un espace de logement (18) pour un élément de filtre (20) pouvant être inséré dans le boîtier et pouvant être traversé radialement par de l'huile, une entrée d'huile (28) et une sortie d'huile (30), un tuyau de soutien (22) présent dans l'espace de logement (18) et portant l'élément de filtre, une vanne de contournement (34) étant prévue dans le tuyau de soutien (22), qui s'ouvre en cas de dépassement d'une pression limite et par laquelle de l'huile peut circuler alors depuis l'entrée d'huile (28) vers la sortie d'huile (30) en contournant l'élément de filtre (20), la vanne de contournement (34) comprenant un siège de soupape (36), un corps de soupape (38) coopérant avec le siège de soupape (36) et une partie de capot (40) conçue en forme de cage, **caractérisé en ce que** le tuyau de soutien (22) et la partie de capot (40) sont conçus d'une seule pièce à base de matière synthétique de telle sorte que la partie de capot (40) est formée sur le tuyau de soutien (22), un rétrécissement (48) dirigé vers l'intérieur radialement, sur lequel la partie de capot (40) est disposée, étant présent dans la zone de l'extrémité libre du tuyau de soutien (22), et le diamètre intérieur du rétrécissement (48) étant égal ou légèrement supérieur au diamètre extérieur d'une partie centrale du siège de soupape, de sorte que, lors de l'insertion du siège de soupape (36) avec le corps de soupape (38) dans le tuyau de soutien (22), le siège de soupape (36) est centré dans le rétrécissement (48).

2. Agencement de filtre à huile (10) selon la revendication 1, **caractérisé en ce que** la partie de capot (40) présente une partie de guidage (46) pour le guidage du corps de soupape (38).

3. Agencement de filtre à huile (10) selon la revendication 1 ou 2, **caractérisé en ce qu'**un élément de ressort (44) s'appuyant sur la partie de capot (40) et sollicitant le corps de soupape (38) contre le siège de soupape (36) est prévu.

4. Agencement de filtre à huile (10) selon l'une quelconque des revendications précédentes, **caractérisé en ce que** le siège de soupape (36) est relié de façon indétachable au tuyau de soutien (22).

5. Agencement de filtre à huile (10) selon l'une quelconque des revendications précédentes, **caractérisé en ce que** le siège de soupape (36) est conçu en forme de bague et présente une collerette (52), dépassant vers l'extérieur radialement pour la liaison avec une partie d'appui (50) du tuyau de soutien (22).

6. Agencement de filtre à huile (10) selon la revendication 5, **caractérisé en ce que** la collerette (52) est soudée, en particulier soudée par ultrasons, avec la partie d'appui (50).

7. Agencement de filtre à huile (10) selon la revendication 5 ou 6, **caractérisé en ce que** la collerette (52) forme l'extrémité libre du tuyau central (22).

8. Agencement de filtre à huile (10) selon au moins l'une quelconque des revendications précédentes, **caractérisé en ce que** le rétrécissement (48) sur le côté tourné vers l'extrémité libre du tuyau de soutien (22) présente au moins par endroits une face frontale de forme annulaire qui forme la partie d'appui (50) pour la collerette du siège de soupape.

9. Agencement de filtre à huile (10) selon la revendication 8, **caractérisé en ce que** la face frontale (50) est entourée par un bord (54) dépassant dans la direction axiale.

10. Agencement de filtre à huile (10) selon la revendication 9, **caractérisé en ce que** le bord (54) forme avec la collerette (52) l'extrémité libre du tuyau de soutien (22).

11. Agencement de filtre à huile (10) selon la revendication 9 ou 10, **caractérisé en ce que** le diamètre extérieur du bord (54) est identique ou inférieur au diamètre extérieur du tuyau de soutien (22).

12. Agencement de filtre à huile (10) selon l'une quelconque des revendications précédentes, **caractérisé en ce que** le tuyau de soutien (22) est inséré avec la soupape de contournement (34) dans l'espace de logement (18) et y est fixé de façon inamovible.
